# EUROPEAN PATENT SPECIFICATION

(11) **EP 3 348 925 B1**
(45) Date of publication and mention of the grant of the patent: **14.07.2021**
(21) Application number: 18151376.3
(22) Date of filing: 12.01.2018
(51) Int. Cl.: F24F 11/30, F24F 11/32, G05B 15/02, F24F 11/63

(54) **AIR-CONDITIONER SYSTEM AND CONTROL METHOD**
KLIMAANLAGENSYSTEM UND STEUERUNGSVERFAHREN
SYSTÈME DE CONDITIONNEMENT D'AIR ET PROCÉDÉ DE COMMANDE

(30) Priority: 12.01.2017 KR 20170005517
(43) Date of publication of application: 18.07.2018
(73) Proprietor: LG Electronics Inc., Seoul 07336 (KR)
(72) Inventor: KIM, Myungkyoon, 08592 Seoul (KR); KIM, Juntae, 08592 Seoul (KR); JUNG, Seunghwan, 08592 Seoul (KR)
(74) Representative: Vossius & Partner Patentanwälte Rechtsanwälte mbB

(56) References cited:
- EP-A1- 0 883 046
- EP-A2- 2 555 474
- WO-A1-2015/175821
- US-A1- 2015 184 880
- US-B1- 6 643 611

## Description

The present disclosure relates to an air-conditioner system and a control method thereof. More specifically, the present disclosure relates to an air-conditioner system for diagnosing an air-conditioner by analyzing data of the air-conditioner and a control method thereof.

An air conditioner is installed to provide a comfortable indoor environment to humans by discharging cold air to a room to adjust an indoor temperature and purify the air of the room to create a pleasant indoor environment. Generally, the air conditioner includes an indoor unit including a heat exchanger and installed in a room and an outdoor unit including a compressor, a heat exchanger, and the like, and supplies a refrigerant to the indoor unit.

The air conditioner, in which the indoor unit including the heat exchanger and the outdoor unit including the compressor, the heat exchanger, and the like, are separately controlled, is operated by controlling power supplied to the compressor or the heat exchanger. The outdoor unit and indoor unit are connected through a refrigerant pipe. Compressed refrigerant from the compressor of the outdoor unit is supplied to the heat exchanger of the indoor unit through the refrigerant pipe. Heat-exchanged refrigerant in the indoor unit's heat exchanger flows back into the outdoor unit's compressor through the refrigerant pipe. As a result, the indoor unit discharges the cold or hot air into the room via the heat exchange using the refrigerant.

In the air-conditioner, the configurations of the indoor unit and the outdoor unit are different. Therefore, data to be measured or controlled is different between the indoor unit and the outdoor unit, and, thus, the data of the indoor unit and the data of the outdoor unit are configured differently. Further, a plurality of indoor units are connected to the outdoor unit, and a plurality of outdoor units are provided. Thus, the amount of data transmitted from the indoor unit and the outdoor unit increases in a proportional manner to the number of connected units.

Air-conditioners are interconnected between buildings or interconnected in small groups. An air-conditioner system transmits and receives the data, determines the condition of the corresponding air conditioner, and diagnoses the failure thereof. Recently, it is a tendency to diagnose faults of the air-conditioners by determining the states of the air-conditioners by collecting and analyzing data of a plurality of air-conditioners dispersed in a plurality of regions.

Data transmitted from multiple air-conditioners is stored in the database. A server that processes the data analyzes the data collected in the database to determine the condition of the air-conditioner and diagnose the failure thereof.

However, regarding the air-conditioner data, 70 to 150 kinds of data are generated from one air-conditioner according to the configuration of the corresponding air conditioner. As the server is connected to hundreds of thousands of air-conditioners, the amount of data the server has to process increases. Thus, it takes a lot of time for the server to analyze the data and derive the results. Therefore, there is a problem that the server cannot determine the state of the air-conditioner in real time

As a result, the server may not instantaneously cope with the air-conditioner failure, and thus the air-conditioner is damaged. Further, as the air-conditioner does not operate properly, it causes inconvenience to the user. Therefore, there is a need for an approach capable of processing data of a plurality of air-conditioners within a predetermined time.

US 6 643 611 B1 relates to a service system including a monitoring center which has a customer database, an operation information database for storing operation information of air conditioners, and a device information database having device information on the air conditioners related with each customer of the customer database. When it decides that there is anomaly in the operation information, the monitoring center sends to a cellular phone over the Internet information representing the content of the anomaly and the customer information and device information associated with the operation information which was judged abnormal.

US 2015/184880 A1 relates to a monitoring system wherein operation data on an air-conditioning apparatus is exchanged between the air-conditioning apparatus and a management apparatus. The management apparatus includes a failure cause diagnosis unit that diagnoses the cause of a failure of the air-conditioning apparatus on the basis of the operation data.

The purpose of the present disclosure is to provide an air-conditioner system and a control method thereof. In particular, it is an object of the present disclosure to provide an air-conditioner system for diagnosing an air-conditioner by processing air-conditioner data in real time and a control method thereof.

In a first aspect of the present disclosure, there is provided an air-conditioner system comprising: a plurality of air-conditioners; a management server configured to receive air-conditioner data from the plurality of air-conditioners at a predetermined time interval and to analyze the received air-conditioner data to diagnose a state of the air-conditioners, wherein the management server has a memory; and a database configured to store the air-conditioner data therein, wherein the management server is configured to receive the air-conditioner data from the air-conditioners, to store the received air-conditioner data in the memory, and, thereafter, to analyze the air-conditioner data to diagnose the state of the air-conditioners, wherein the management server is configured to determine, based on a diagnostic result, whether the air-conditioner data corresponds to a normal, abnormal or failure state.

The management server includes: a communication unit for receiving the air-conditioner data; a main control unit for storing the air-conditioner data in the memory; and a diagnosing unit for analyzing the air-conditioner data to determine whether the air-conditioner data corresponds to a normal, abnormal, or failure state.

When the main control unit determines, based on the diagnosis result, that the air-conditioner data corresponds to the normal state, the main control unit is configured to delete the air-conditioner data from the memory and discard the air-conditioner data.

When the main control unit determines, based on the diagnosis result, that the air-conditioner data corresponds to the abnormal or failure state, the main control unit is configured to store the air-conditioner data into the database.

In one embodiment of the first aspect, the diagnosing unit compares air-conditioner data of each air conditioner with previously stored air-conditioner data, data of other air-conditioner, or data of the same part in each air-conditioner, thereby to determine whether the air-conditioner data of each air-conditioner corresponds to the normal, abnormal, or failure state.

In one embodiment of the first aspect, the diagnosing unit is configured to analyze the air-conditioner data of each air conditioner to diagnose an abnormal state of a part of each air-conditioner, to predict efficiency and performance of each air-conditioner, and to diagnose a state of each air-conditioner.

In one embodiment of the first aspect, when a corresponding air-conditioner is currently operating normally but an efficiency or performance degradation thereof is predicted due to changes over a period of time, the diagnosing unit is configured to determine that the corresponding air-conditioner is in an abnormal state.

In one embodiment of the first aspect, the diagnosing unit is configured to analyze the air-conditioner data to perform parts diagnosis, operation state diagnosis, and performance diagnosis for the air-conditioner.

In one embodiment of the first aspect, the management server further includes a filtering unit for filtering air-conditioner data when the air-conditioner data corresponds to a normal state, wherein the filtering unit is configured to determine an error of the air-conditioner data, and to discards the data when the data has an error, wherein the filtering unit is configured to determine whether the air-conditioner data is necessary for diagnosis, and to exclude the data at a time of diagnosis by the diagnosing unit when the air-conditioner data is not necessary for diagnosis.

In one embodiment of the first aspect, the management server further comprises a message unit configured to generate a message based on the diagnostic result, wherein the message unit is configured to generate the message including the diagnosis result in a format corresponding to a destination receiving the diagnosis result, wherein the format includes a diagnostic result report, a web page, a text, a short message, and a multimedia message.

In one embodiment of the first aspect, when the air-conditioner data corresponds to the abnormal or failure state, the main control unit is configured to transmit a repair request to a service center via the communication unit, and to transmit the message to the air-conditioner issuing the air-conditioner data or a terminal device having control authority over the air-conditioner.

In a second aspect of the present disclosure, there is provided a method for controlling an air-conditioner system, the method comprising: receiving air-conditioner data from a plurality of air-conditioners; storing the received air-conditioner data in a memory; filtering the air-conditioner data by discarding the air-conditioner data when the air-conditioner data is not readable data; diagnosing states of the air-conditioners by analyzing the air-conditioner data; and determining, based on the diagnostic result, whether the air-conditioner data corresponds to a normal, abnormal or failure state.

The method further includes deleting, from the memory, air-conditioner data corresponding to the normal state based on the diagnosis result.

The method further includes storing air-conditioner data corresponding to an abnormal state or a failure state in a database based on the diagnosis result.

The filtering further includes determining whether the air-conditioner data is readable data.

In one embodiment of the second aspect, the diagnosing comprises comparing air-conditioner data of each air conditioner with previously stored air-conditioner data, data of other air-conditioner, or data of the same part in each air-conditioner, thereby to determine whether the air-conditioner data of each air-conditioner corresponds to the normal, abnormal, or failure state.

In one embodiment of the second aspect, the diagnosing comprises analyzing the air-conditioner data of each air conditioner to diagnose an abnormal state of a part of each air-conditioner, predicting efficiency and performance of each air-conditioner, and diagnosing a state of each air-conditioner.

In one embodiment of the second aspect, the diagnosing comprises, when a corresponding air-conditioner is currently operating normally but an efficiency or performance degradation thereof is predicted due to changes over a period of time, determining that the corresponding air-conditioner is in an abnormal state.

In one embodiment of the second aspect, the filtering comprises determining whether the air-conditioner data corresponds to a normal state.

In one embodiment of the second aspect, the method further comprises, when the air-conditioner data corresponds to the abnormal or failure state, transmitting a repair request to a service center; and transmitting a message indicating the abnormal or failure state to a terminal device having control authority over the air-conditioner issuing the air-conditioner data corresponding to the abnormal or failure state.

Thus, according to the present disclosure, the air-conditioner data is stored in the memory and processed immediately, and the classified air-conditioner data based on the processing result is stored in the database.
Thus, it is possible to diagnose the condition of the air-conditioner by processing the air-conditioner data within a predetermined time. This makes it possible to quickly cope with an abnormality or a failure, and to prevent a possible failure of the air conditioner.

Further, the management server may be connected to the service center to instruct the corresponding air-conditioner to be repaired when a failure thereof occurs. By classifying the air-conditioner data in terms of abnormality or failure and storing the corresponding data in the database, data management may be easy and database may be used more efficiently.

Further, the management server analyzes and processes the data of the plurality of air-conditioners to obtain statistical information including the history of failure of the air-conditioner and the power usage based on the environment or facility, and to analyze use pattern of the air-conditioner.

Moreover, according to the present disclosure, the server diagnoses abnormal conditions of sensors and parts in the air-conditioner in real time, check and repair air-conditioner based on the diagnosis result, and deals with the air conditioner in case of failure thereof. This prevents air-conditioner damage, maintains constant performance, and improves air-conditioner efficiency.

The above and other objects and features of the present disclosure will become apparent from the following description of preferred embodiments given in conjunction with the accompanying drawings, in which:
FIG. 1 is a diagram showing the configuration of an air-conditioner system according to an embodiment of the present disclosure.
FIG. 2 is a diagram showing the configuration of an air-conditioner according to an embodiment of the present disclosure.
FIG. 3 is a block diagram schematically showing a control configuration of a management server of an air-conditioner system according to an embodiment of the present disclosure.
FIG. 4 is a block diagram in which the management server of FIG. 3 is divided based on functions thereof.
FIG. 5 is an exemplary diagram that is referred to explain the data distribution processing of the management server of the air-conditioner system according to the embodiment of the present disclosure.
FIG. 6 is a diagram showing an example of data of an air-conditioner according to an embodiment of the present disclosure.
FIG. 7 is a flowchart showing a control method of an air-conditioner system according to an embodiment of the present disclosure.
FIG. 8 is a flowchart showing a data processing method of an air-conditioner system according to an embodiment of the present disclosure.
FIG. 9 is a flowchart referred to explain the data processing and fault diagnosis of the air-conditioner system according to the embodiment of the present disclosure.
FIG. 10 is an exemplary diagram illustrating an example of abnormal occurrence data of an air-conditioner system according to an embodiment of the present disclosure.

For simplicity and clarity of illustration, elements in the figures are not necessarily drawn to scale. The same reference numbers in different figures denote the same or similar elements, and as such perform similar functionality. Also, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Examples of various embodiments are illustrated and described further below. It will be understood that the description herein is not intended to limit the claims to the specific embodiments described. On the contrary, it is intended to cover alternatives, modifications, and equivalents as may be included within the scope of the present disclosure as defined by the appended claims.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "connected to", or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In the following description, usage of suffixes such as 'module', 'part' or 'unit' used for referring to elements is given merely to facilitate explanation of the present disclosure, without having any significant meaning by itself. Therefore, 'module', 'part', and 'unit' may be mixedly used. Further, a control unit and other units included in the air-conditioner according to the present disclosure may be implemented by one or more processors and implemented by a hardware device.

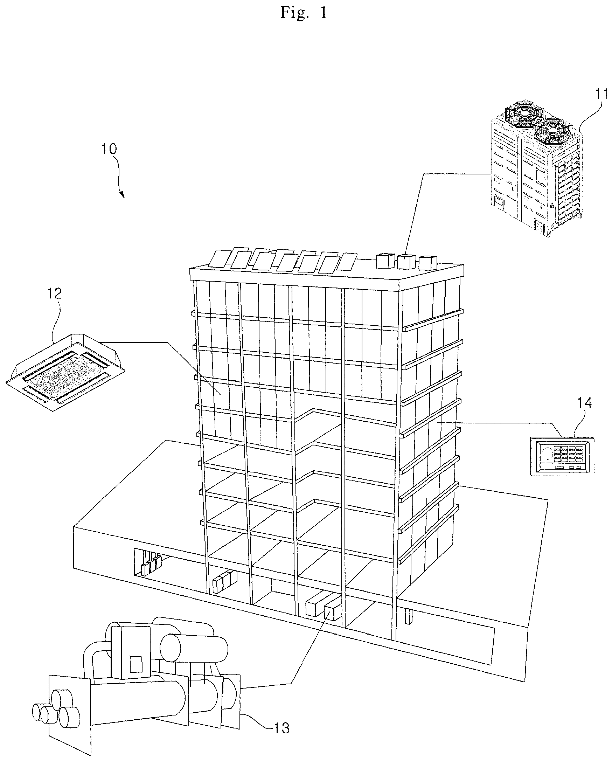

FIG. 1 is a diagram showing the configuration of an air-conditioner system according to an embodiment of the present disclosure.

As shown in FIG. 1, the air-conditioner system includes a plurality of air-conditioners 1 to n, a service center 70, a management server 100, a database 90, and a terminal device 80.

A plurality of air-conditioners 1 to n, which are installed in a plurality of locations, is connected to the management server 100 over a network N.

The service center 70 performs customer support, repair and inspection services for the air-conditioner. The service center 70 receives the user's complaints via the Internet or telephone network, remotely conducts the consultation, and dispatches the service engineer to the place where the air-conditioner is installed in response to the request for repair of the air-conditioner.

The service center 70 is connected to the management server 100. Accordingly, when it is determined that the air conditioner is malfunctioning, the service center 70 may set a repair reservation for the air conditioner to the management server 100 and dispatch a service engineer accordingly.

The terminal device 80 is connected to the air-conditioner via the network N to monitor the condition of the air-conditioner and to control the operation thereof. Further, the terminal device 80 may access the service center 70 through the network to request a service. The terminal device 80 has a communication module mounted therein and performs network connection. The terminal device 80 may be implemented as a device equipped with an air-conditioner control application therein. For example, such a device may include a computer, a laptop, a smart phone, a PDA, a tablet PC, and the like.

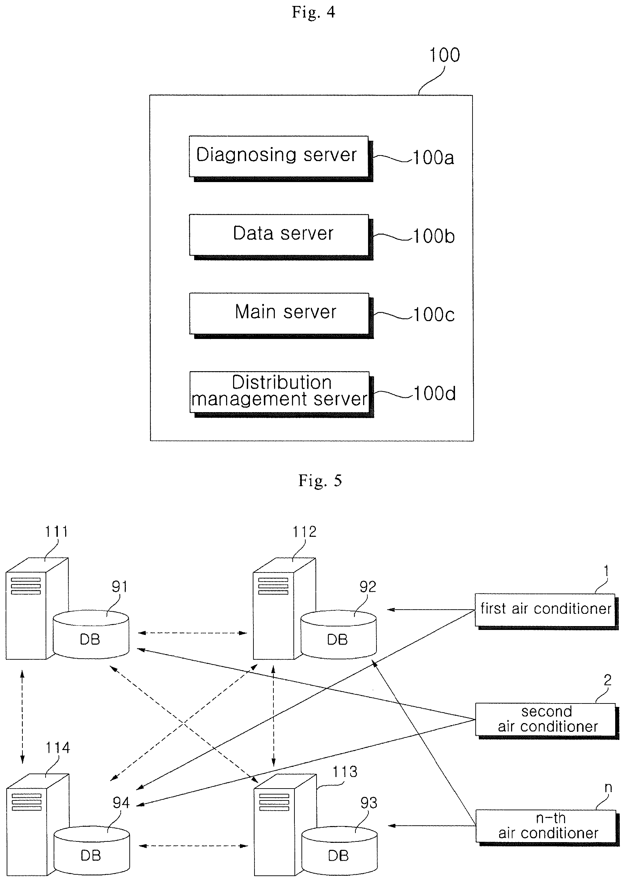

The management server 100 analyzes the data received from the plurality of air-conditioners 1 to n 10 to determine the state of the air-conditioner and diagnoses the failure thereof. The management server 100 stores the data of the plurality of air-conditioners in the database 90 and manages the stored data. The management server 100 may be constructed as a single server. Alternatively, as shown in FIG. 5, a plurality of servers may be interconnected to process the data in a distributed manner.

The management server 100 may be configured on a region basis or on a country basis to manage air-conditioner data and analyze air-conditioner operation.

Further, the management server 100 analyzes and processes the data of a plurality of air-conditioners to obtain statistical information including the history of failure of the air-conditioner and the power usage based on the environment or facility, and to analyze use pattern of the air-conditioner.

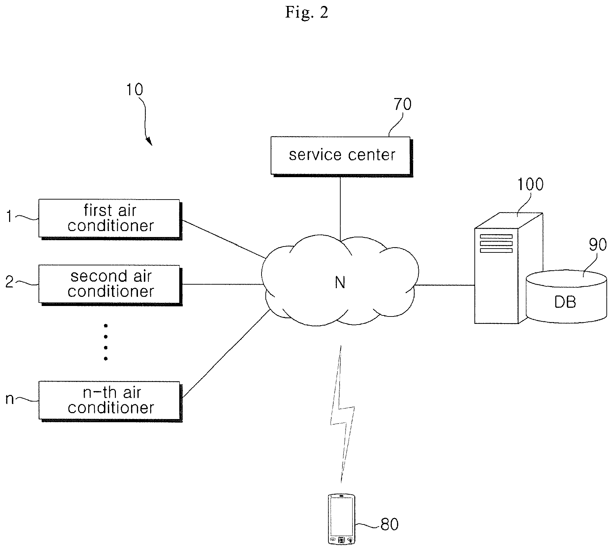

FIG. 2 shows the configuration of the air-conditioner according to the embodiment of the present disclosure.

Referring to FIG. 2, the air-conditioner 10 includes an outdoor unit 11, an indoor unit 12, and a controller 14.

Further, the air-conditioner 10 may include a chiller 13, an air conditioning unit (not shown), a ventilation unit, and the like, and may further include at least one of an air cleaning unit, a humidification unit, and a heater. In the air-conditioner, the units are interconnected to operate in conjunction with the operation of the indoor unit and the outdoor unit. Further, the air-conditioner 10 may be operated in connection with a mobile device, a security device, and an alarm device, etc. in a building.

The controller 14 controls the operation of the indoor unit 12 and the outdoor unit 11 in response to an input user command. The controller 14 periodically receives and stores data on the operation states of the indoor unit and the outdoor unit corresponding to the control thereof, and outputs the operation states on the monitoring screen. The controller 14 may be connected to the indoor unit 12 to perform operation setting, lock setting, schedule control, group control, peak control for power use, and demand control for the indoor unit.

The outdoor unit 11 is connected to indoor unit 12 via the refrigerant pipe, and supplies refrigerant to the indoor unit. Further, the outdoor unit 11 periodically communicates with a plurality of indoor units to transmit and receive data therebetween, and to change the operation according to the operation setting changed from the indoor unit.

The indoor unit 12 includes an electronic expansion valve (not shown) for expanding refrigerant supplied from outdoor unit 11, an indoor heat exchanger (not shown) for heat-exchanging refrigerant, an indoor unit fan (not shown) for allowing indoor air to flow into the indoor heat exchanger and for allowing the heat-exchanged air to be exposed to the indoor, a plurality of sensors (not shown), and control means (not shown) for controlling the operation of the indoor unit.

Further, the indoor unit 12 includes a discharge port (not shown) for discharging the heat-exchanged air. The discharge port is provided with a wind direction adjusting means (not shown) for closing the discharge port and controlling the direction of the discharged air. The indoor unit controls the rotating speed of the indoor unit fan, thereby controlling the intake air and the air to be discharged and controlling the air flow rate. The indoor unit 12 may further include an output unit for displaying the operation status and setting information of the indoor unit and an input unit for inputting the setting data. In this regard, the indoor unit 12 transmits setting information for the air-conditioner operation to a remote controller (not shown) connected thereto, outputs the information via the remote controller, and receives data.

The outdoor unit 11 operates in the cooling mode or the heating mode in response to the data or controller control command received from the indoor unit 12 connected thereto, and supplies refrigerant to the indoor unit connected thereto.

In the presence of a plurality of outdoor units, each outdoor unit may be connected to a plurality of indoor units, and the refrigerant may be supplied to a plurality of indoor units via a distributor.

The outdoor unit 11 may include at least one compressor for compressing the refrigerant and discharging the pressurized gas refrigerant, an accumulator that separates the gas refrigerant and the liquid refrigerant from the refrigerant to prevent the non-vaporized liquid refrigerant from entering the compressor, an oil collection unit for collecting oil from the refrigerant discharged from the compressor, an outdoor heat exchanger for condensing or evaporating the refrigerant via heat exchange with the outside air, an outdoor unit fan for introducing air into the outdoor heat exchanger in order to facilitate the heat exchange of the outdoor heat exchanger, and for discharging the heat-exchanged air to the outside, a four-way valve that changes the refrigerant flow path according to the operation mode of the outdoor unit, at least one pressure sensor for measuring pressure, at least one temperature sensor for measuring temperature, and a control unit for controlling the operation of the outdoor unit and performing communication with other units. The outdoor unit 11 further includes a plurality of sensors, valves, super-coolers, etc., but a description thereof will be omitted below.

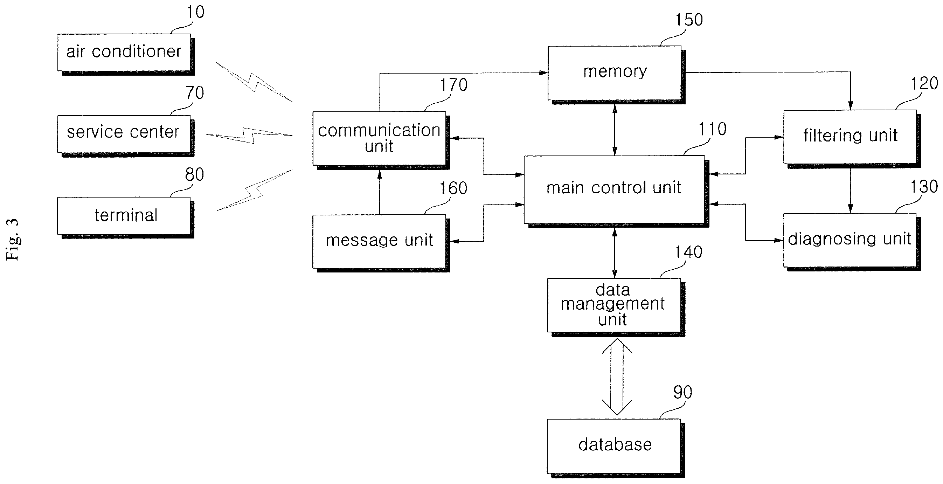

FIG. 3 is a block diagram schematically showing a control configuration of a management server of an air-conditioner system according to an embodiment of the present disclosure.

Referring to FIG. 3, the management server 100 includes a communication unit 170, a memory 150, a filtering unit 120, a diagnosing unit 130, a message unit 160, a data management unit 140, and a main control unit 110 for controlling overall operations.

The memory 150 is a storage device inside the management server and stores the data of the management server. The memory 150 stores control data for operation and data processing of the management server, data for troubleshooting, and data to be transmitted and received. The memory 150 may be implemented in a hardware manner, as a variety of storage devices such as ROM, RAM, EPROM, flash drive, hard drive, and the like.

The memory 150 stores the air-conditioner data received from the communication unit 170, stores the diagnosis result from the diagnosing unit 130, and stores the message generated by the message unit 160.

The memory 150 temporarily stores the air-conditioner data. The memory temporarily stores the air-conditioner data for data analysis before the air-conditioner data is stored in the database. Some of the air conditioning data stored in the memory is discarded by the filtering unit and the diagnosis is performed with first remaining data only. In response to the diagnostic result of the diagnosing unit, only some data among the first remaining data may be stored in the database 90 and second remaining data among the first remaining data may be discarded.

The communication unit 170 receives air-conditioner data from the air-conditioner 10 via the network N. When the communication unit 170 receives data from a plurality of air-conditioners 1 to n, it stores the data in the memory 150. In this connection, the communication unit 170 receives air-conditioner data by communicating with the stopped air-conditioner. That is, when the air-conditioner stops the operation for a predetermined time, or when the operation thereof stops after reaching the target temperature, or when the operation thereof stops after the operation is carried out according to the designated schedule, the communication unit 170 transmits data of the air conditioner generated or sensed during the operation thereof to the management server. When the air-conditioner is in operation, its data change is significant. Thus, when the air-conditioner is shut down, the air conditioner sends air-conditioner data to the server.

Further, the communication unit 170 is connected to the service center 70 and the terminal device 80 through the network to transmit and receive data. The communication unit 170 transmits a diagnosis result of the diagnosing unit 130 or a message generated from the message unit 160 to at least one of the service center 70, the terminal device 80 and the air-conditioner 10 in a response to a control command of the main control unit.

The filtering unit 120 filters the air-conditioner data stored in the memory 150. The filtering unit 120 determines whether the air-conditioner data stored in the memory is machine readable data. The filtering unit 120 discards the machine unreadable data or otherwise requests that the data corresponding to the unreadable data be retransmitted.

The diagnosing unit analyzes the air-conditioner data and performs parts diagnosis, operation status diagnosis and performance diagnosis on the air-conditioner.

The diagnosing unit 130 analyzes the air-conditioner data to determine whether the air-conditioner is in a normal state or in an abnormal state. The diagnosing unit 130 does not derive a diagnostic result for data indicating a normal state if the air-conditioner is in a normal state.

The diagnosing unit 130 analyzes the air-conditioner data indicating an abnormal condition, and generates a diagnosis result including a solution to the abnormality, the cause of the abnormality, and the abnormality sate. Further, the diagnosing unit 130 analyzes air-conditioner data to distinguish between normal and malfunctioning conditions. In the event of the latter condition, the diagnosing unit 130 generates a diagnostic result that includes the cause of the failure and a solution for resolving the failure.

The diagnosing unit 130 compares the information included in the air-conditioner data with the reference value to determine whether or not the abnormality is present. The diagnosing unit 130 analyzes the air-conditioner data in consideration of the comparison among the air-conditioners of the same type, the examination of the factors according to the external environment, and the installation environments of the air-conditioner, and diagnoses the failure thereof accordingly.

In this connection, the abnormal state may include a case when there is a problem with the air-conditioner but the air-conditioner is operational, or a case when the performance or efficiency of the air-conditioner is degraded, or a case when the air-conditioner is currently operating but is likely to fail within a certain amount of time. On the other hand, the fault state is a state in which a fault of the air conditioner has already occurred and thus the air conditioner may not be operated.

The message unit 160 generates a message corresponding to the diagnosis result and transmits the generated message to the air-conditioner 10 or the terminal device 80. In this connection, messages are generated in a form readable by the air-conditioner or terminal device. When the message is transmitted to the terminal device, the message may be composed of a short message, a multimedia message, as well as a mobile web page.

The main control unit 110 controls the communication unit to transmit/receive data, and controls data input/output into/from the memory.

The main control unit 110 causes the air-conditioner data for the air-conditioner having the abnormal state to be stored in the database 90 together with the diagnosis result, according to the diagnosis result of the diagnosing unit. The main control unit 110 deletes the air-conditioner data for the air-conditioner determined to be normal by the diagnosing unit from the memory and discards the data.

The main control unit 110 causes the diagnosed air-conditioner data to be discarded or stored in the database as described above. Thus, the main control unit 110 deletes the data from the memory so that the new data is stored in the memory.

Further, in the case where the diagnosis unit 130 is in an abnormal state or a failure state, the main control unit 110 allows a diagnosis result to be sent to the service center via the communication unit 170 to perform the service reservation when dispatch of a service technician is required.

Further, the main control unit 110 causes the message generated by the message unit to be transmitted via the communication unit 170

FIG. 4 is a block diagram in which the management server of FIG. 3 is divided based on functions thereof. FIG. 5 is an exemplary diagram that is referred to explain the data distribution processing of the management server of the air-conditioner system according to the embodiment of the present disclosure.

Referring to FIG. 4, the management server may be configured so that a plurality of servers may process data in a distributed manner. The management server 100 may include a diagnosis server 100a, a data server 100b, a main server 100c, and a distribution management server 100d. Each server may be a single server. Alternatively, each server may be configured such that a plurality of sub-servers may be configured to be interconnected. In the latter case, data may be processed in a distributed manner.

The diagnosis server 100a analyzes the air-conditioner data of the memory, filters the air-conditioner data, analyzes the air-conditioner data, diagnoses an abnormality or failure, and derives a solution therefrom. The diagnosis server 100a compares the air-conditioner data of the same type. The diagnosis server 100a may compare the previous and current data of the corresponding air-conditioner to diagnoses an abnormality or failure thereof. The diagnosis server 100a may diagnose the air-conditioner based on the data of the external environment or the installation environment to diagnoses an abnormality or failure.

The data server 100b stores data in the database 90 connected thereto, and retrieves and transmits specific data according to a request. The data server 100b causes the air-conditioner data to be stored in the database based on the diagnosis result according to the failure diagnosis.

The main server 100c controls data transmission/reception of the management server and data input/output into/from the management server. When the management server includes a plurality of servers, the distribution management server 100d allocates data to each server to distribute the flow of each data to each sever such that the severs process the air-conditioner data in a distributed manner. Further, when the diagnosis server is composed of a plurality of sub-servers, the distribution management server assigns air-conditioner data to each diagnosis sub-server.

As shown in FIG. 5, the management server 100 includes a plurality of servers 111 to 114, which process air-conditioner data.

Further, one of the function-based servers of the management server, as shown in FIG. 4, for example, a diagnosis server may be composed of a plurality of servers as shown in FIG. 5. Thus, each diagnosis sub-server may analyze the air-conditioner data to diagnose the air-conditioner.

For example, the distribution management server assigns data to a plurality of servers 111 to 114. The data of the first air-conditioner 1 is processed by the second server 112, the data of the second air-conditioner 2 is processed by the first server 111 or processed by the fourth server 114 or the data of the nth air-conditioner n is processed by the third server 113. It is possible to diagnose an abnormality or failure by comparing the air-conditioner data via sending and receiving data between the servers.

Each server may store in its database 91 to 94 the corresponding processed air-conditioner data with an abnormal or failure state. In this connection, the databases 91 to 04 may be managed by the data server.

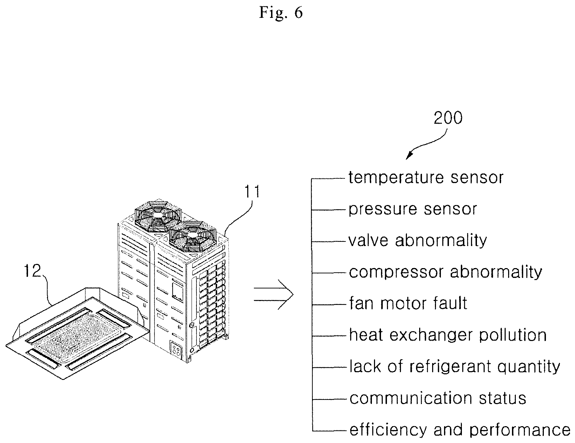

FIG. 6 is a diagram showing an example of data of an air-conditioner according to an embodiment of the present disclosure.

Referring to FIG. 6, the air-conditioner 10 transmits a plurality of air-conditioner data 200 to the management server 100.

The air-conditioner 10 collects data generated or measured from each unit such as the outdoor unit 11 and the indoor unit 12 and and transmits the collected data to the management server 100.

The management server 100 analyzes the air-conditioner data and performs parts diagnosis, operation status diagnosis and performance diagnosis for the air-conditioner.

In this connection, the air-conditioner 10 sends the air-conditioner data 200 containing the following information to the management server 100: the plurality of information generated or measured during operation thereof, for example, measurements from the temperature sensors such as room temperature, outdoor temperature, refrigerant temperature, compressor pressure, piping pressure, etc., the operating voltage of the valve, the consumed voltage or current value of the valve, the abnormality of the valve, compressor fault, fan motor fault, heat exchanger pollution, lack of refrigerant quantity, information on communication status, efficiency and performance, etc.

The management server 100 receives the air-conditioner data 200 from the globally installed plurality of air-conditioners via the network N, temporarily stores the data in the memory, not the database, and analyzes the data. After diagnosing the failure of the air-conditioner, the server 100 causes the air-conditioner data to be stored in the database 90.

The diagnosing unit 130 of the management server 100 diagnoses sensor and component abnormalities, and predicts the efficiency and performance of the equipment based on the air-conditioner data. Accordingly, the diagnosing unit 130 of the management server 100 determines whether the corresponding air-conditioner is in a normal state, an abnormal state, or a failure state, thereby generating a diagnosis result.

In the case where the air-conditioner is currently in normal operation, that is, even if the data value is included in the normal range, the performance thereof may be degraded in response to the change over a certain period of time. In this case, the management server 100 may determine that the air conditioner is in an abnormal state. The management server 100 compares not only the current data but also data already stored in the database or data of other air-conditioners of the same model, or data of other air-conditioners having similar performance, to determine whether there is an abnormality for the corresponding air conditioner.

For example, the management server 100 may compare data of air-conditioners based on the model year, installation location, model, structure, capacity, and historical data of the air-conditioners, and temperature, humidity, and season information, thereby diagnosing the air-conditioners.

The management server 100 compares and analyzes the values indicated by the cycle information between the air-conditioners from the air-conditioner data to derive the on-site average sensor value, the abnormal value, and the air-conditioner usage pattern. The management server 100 may analyze the sensor value fluctuation based on the external environments by correlating the weather information such as the external temperature, humidity, etc. from the air-conditioner data with the sensor values indicated from the cycle information. The management server 100 diagnoses the air-conditioner by comparing the cycle information with the actual installation environment and deriving the cycle operation trend according to the installation environment.

When the management server 100 determines that the air conditioner is in an abnormal state, the management server 100 checks the air conditioner before a failure occurs, and generates a diagnosis result to eliminate the abnormality.

When the management server 100 determines that the air conditioner is in an abnormal or failed state, the management server 100 may transmit the diagnosis result for the air-conditioner to the air-conditioner or the terminal device, and transmit the diagnosis result and the failure history to the service center. The management server 100 generates messages for an error or failure and transmits them as described above. The management server 100 may generate or transmit text based error notifications. Alternatively, the management server 100 may generate and transmit a GUI-based diagnosis result as a report so that the user may confirm the diagnosis result.

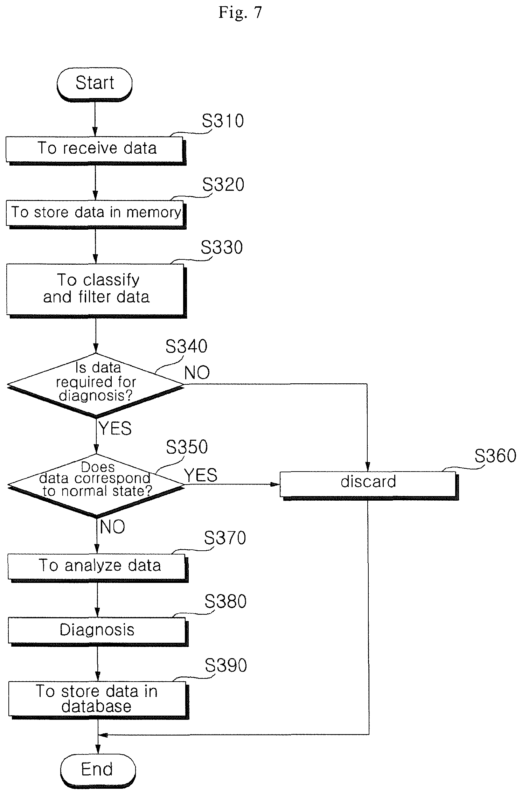

FIG. 7 is a flowchart showing a control method of an air-conditioner system according to an embodiment of the present disclosure.

Referring to FIG. 7, the management server 100 receives the air-conditioner data from the plurality of air-conditioners 1 to n connected thereto via the network N, using the communication unit 170 S310.

The main control unit 110 stores the received air-conditioner data in the memory 150 instead of the database in operation S320.

The filtering unit 120 classifies the air-conditioner data of the memory and determines whether the data is analyzed or whether there is an error in the data itself, thereby to filter the data.

The filtering unit 120 analyzes the air-conditioner data, and determines whether the corresponding data is necessary for diagnosis S340. The filtering unit excludes data at the time of diagnosis when the data is not necessary for determining abnormality or failure of the air-conditioner.

The main control unit 110 causes the operation corresponding to the excluded data to be performed. For example, when the air-conditioner data is not data including the cycle information but is data requesting specific data, the main control unit 110 retrieves and transmits the specific data as requested from the database.

Further, when the requested operation is processed, the main control unit 110 discards the specific data and deletes the specific data from the memory.

Otherwise, when the data is the data needed for diagnosis, that is, when the data is cycle data used for diagnosing an abnormality or failure of the air-conditioner, the diagnosing unit 130 analyzes this air-conditioner data. Thus, the diagnosing unit 130 determines whether the data is data representing a normal state, an abnormal state, or data indicating a failure state.

When the data is data indicating the normal state, that is, normal data, the diagnosing unit 130 excludes the data at the time of diagnosis. The main control unit 110 discards the excluded normal data and deletes the data from the memory S360.

When the data is not normal data, the diagnosing unit 130 analyzes the data at step S370. Accordingly, the diagnosing unit 130 determines whether an abnormality or failure of the air-conditioner is present, analyzes the cause of the abnormality or failure, and obtains a solution thereto. In this way, the diagnosing unit 130 diagnoses the condition of the air-conditioner S380.

The diagnosing unit 130 generates diagnostic results in terms of anomalies or failures.

The main control unit 110 responds to this diagnosis result and sends the diagnosis result to the service center. Alternatively, the main control unit 110 allows the diagnostic results to be sent to the air-conditioner or the terminal device 80 having control authority over the air-conditioner.

The main control unit 110 applies the diagnosis result to the message unit 160. Accordingly, the message unit 160 generates a message in different forms corresponding to the destinations receiving the diagnostic result.

For example, when the diagnostic result is transmitted to a terminal device such as a smart phone or a computer capable of outputting data, the message unit generates a GUI based diagnostic result report or generates a web page. Further, when the diagnostic result is transmitted to a 2G terminal device capable of outputting only a short message, the message unit generates a short message. When the diagnosis result is transmitted to the service center, the message unit generates a message including a diagnosis result, a failure history, and a repair request.

The main control unit 110 transmits the message generated from the message unit using the communication unit 170.

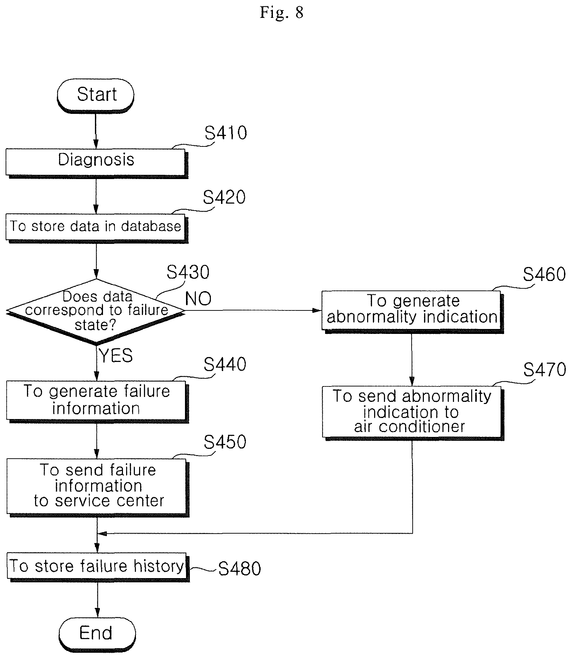

FIG. 8 is a flowchart showing a data processing method of an air-conditioner system according to an embodiment of the present disclosure.

Referring to FIG. 8, the management server 100 analyzes the air-conditioner data to diagnose the condition of the air-conditioner S410.

The main control unit 110 stores the diagnosed air-conditioner data and the diagnosis result in the database 90 at step S420.

In step S430, the main control unit 110 determines whether the corresponding air-conditioner is malfunctioning based on the diagnosis result.

When the corresponding air conditioner is failed, the message unit 160 generates fault information S440.

The main control unit 110 transmits the generated failure information to the service center 70 using the communication unit 170 at step S450. Thereby, the air-conditioner repair is requested.

Further, the main control unit may transmit the failure information to the air-conditioner and a pre-registered terminal device having control authority over the air-conditioner.

Otherwise, when the air conditioner is not in a failure state but is in an abnormal state based on the diagnosis result, the main control unit 110 uses the message unit 160 to generate a message for an abnormal state notification S460.

In this connection, the message unit 160 generates a message for an abnormal state notification in a format corresponding to the message destination. Specifically, the message unit generates a message in the form of a textual document, a web page, a short message, a multimedia message, or a general notification.

The main control unit 110 transmits the message for the abnormal state notification as generated by the message unit to the air-conditioner 10 using the communication unit 170 at step S470. Further, the main control unit 110 transmits the message for the abnormal state notification to the pre-registered terminal device 80 having the control authority to the air-conditioner.

The main control unit 110 stores the diagnosis history according to the diagnosis result of the air-conditioner S480.

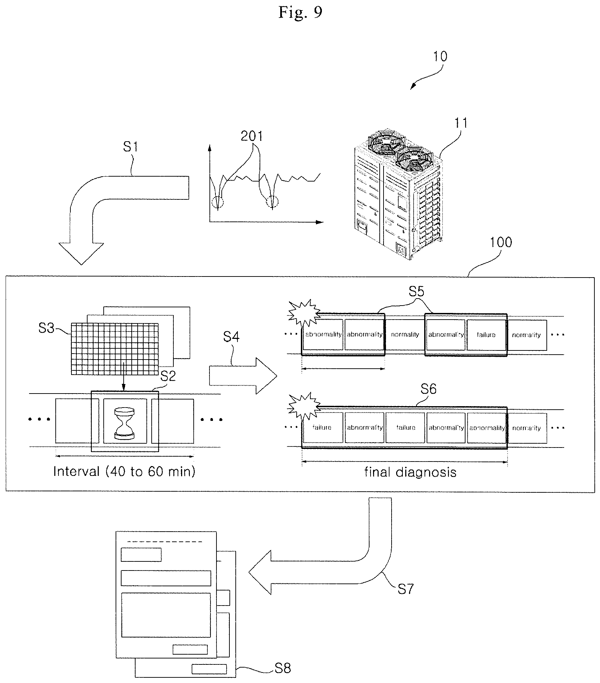

FIG. 9 is a flowchart referred to explain the data processing and fault diagnosis of the air-conditioner system according to the embodiment of the present disclosure.

Referring to FIG. 9, the air-conditioner 10 transmits air-conditioner data including a plurality of pieces of information including the cycle information to the management server 100 via the network N S1. For example, the air-conditioner 10 may transmit cycle information including data including refrigerant pipe temperature, pressure, compressor operating frequency, etc. of the outdoor unit 11 as the air-conditioner data to the server 100. In case of sudden increase or decrease of data such as temperature, pressure, etc., the air-conditioner 10 determines that there is an abnormality in 201 and transmits the air-conditioner data to the management server.

The management server 100 stores the received air-conditioner data in the memory 150 at S2. The server 100 analyzes the air-conditioner data and diagnoses the condition of the air-conditioner according to the diagnosis logic S3.

The management server 100 stores the received air-conditioner data in a database 90. Thereafter, the management server 100 stores the received air-conditioner data in memory instead of diagnosing the data. Thereafter, the management server 100 analyzes the air-conditioner data and diagnoses the air-conditioner data, and then stores the air-conditioner data in the database according to the diagnosis result.

The management server 100 performs the diagnosis according to the diagnosis logic S4. The management server 100 determines whether the air-conditioner data stored in the memory corresponds to an abnormal state, a normal state, or a fault state. The management server 100 deletes the air-conditioner data S5 corresponding to the normal state from the memory and discards the data.

Further, a final determination is made based on the air-conditioner data as determined as corresponding to the abnormality or failure state based on the diagnostic result. In some cases, data corresponding to the normal-state condition but associated with an anomaly or failure state may be included in the diagnostic results without being discarded.

The management server 100 generates the final diagnosis result based on the air-conditioner data determined as corresponding to the abnormal or failure state S7.

For a single air-conditioner, a plurality of air-conditioner data is generated. Thus, the management server 100 combines the results for a plurality of air conditioner data to generate the diagnostic result S8.

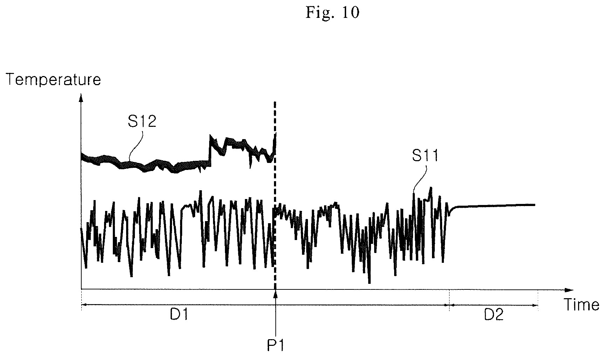

FIG. 10 is an exemplary diagram illustrating an example of abnormal occurrence data of an air-conditioner system according to an embodiment of the present disclosure.

Referring to FIG. 10, the management server 100 analyzes the data on the temperature of the air-conditioner. That, the server 100 compares the measured temperature S12 with the temperature data S11 corresponding to the normal state, and thus, determines whether there occurs the failure of the air conditioner.

The management server 100 may compare the measured temperature S12 with the temperature data of other air-conditioner corresponding to the normal state, the temperature information of other temperature sensors in the air-conditioner, and the previous temperature information, thereby to determine whether there occurs abnormality or failure.

When there is an abnormality in the temperature information related to the operation state, the management server determines that the corresponding air conditioner has failed, and, thus, generates the corresponding diagnosis result, and transmits the result to the corresponding air-conditioner. Accordingly, the air-conditioner may cause the temperature sensor to stop in response to receiving the diagnosis result.

Thus, according to the present disclosure, the received air-conditioner data is stored in the memory and processed immediately, and the classified air-conditioner data based on the processing result is stored in the database. Thus, it is possible to diagnose the condition of the air-conditioner by processing the air-conditioner data within a predetermined time. This makes it possible to quickly cope with an abnormality or a failure, and to prevent a possible failure of the air conditioner. Further, the management server may be connected to the service center to instruct the corresponding air-conditioner to be repaired when a failure thereof occurs. By classifying the air-conditioner data in terms of abnormality or failure and storing the corresponding data in the database, data management may be easy and database may be used more efficiently.

## Claims

1. An air conditioner system comprising:
a plurality of air-conditioners (1 to n);
a management server (100) configured to receive air-conditioner data from the plurality of air-conditioners at a predetermined time interval and to analyze the received air-conditioner data to diagnose a state of the air-conditioners, wherein the management server (100) has a memory (150); and
a database (90) configured to store the air-conditioner data therein,
wherein the management server (100) is configured to receive the air-conditioner data from the air-conditioners, to store the received air-conditioner data in the memory (150), and, thereafter, to analyze the air-conditioner data to diagnose the state of the air-conditioners, and
wherein the management server (100) is configured to determine, based on a diagnostic result, whether the air-conditioner data corresponds to a normal, abnormal or failure state,
wherein the management server (100) includes:
a communication unit (170) for receiving the air-conditioner data;
a main control unit (110) for storing the air-conditioner data in the memory;
a diagnosing unit (130) for analyzing the air-conditioner data to determine whether the air-conditioner data corresponds to a normal, abnormal, or failure state; and
a filtering unit (120) for filtering air-conditioner data,
wherein the filtering unit (120) is configured to determine whether the air-conditioner data is readable data, and to discard the data when the data is not readable data,
the air conditioning system being **characterized in that**
when the main control unit (110) determines, based on the diagnosis result, that the air-conditioner data corresponds to the normal state, the main control unit (110) is configured to delete the air-conditioner data from the memory (150) and discard the air-conditioner data, and
**in that** when the main control unit (110) determines, based on the diagnosis result, that the air-conditioner data corresponds to the abnormal or failure state, the main control unit (110) is configured to store the air-conditioner data into the database (90).

2. The system of claim 1 , wherein the diagnosing unit (130) is configured to compare air-conditioner data of each air conditioner with previously stored air-conditioner data, data of other air-conditioner, or data of the same part in each air-conditioner, thereby to determine whether the air-conditioner data of each air-conditioner corresponds to the normal, abnormal, or failure state.

3. The system of any one of claims 1 or 2, wherein the diagnosing unit (130) is configured to analyze the air-conditioner data of each air conditioner to diagnose an abnormal state of a part of each air-conditioner, to predict efficiency and performance of each air-conditioner, and to diagnose a state of each air-conditioner.

4. The system of claim 3, wherein when a corresponding air-conditioner is currently operating normally but an efficiency or performance degradation thereof is predicted due to changes over a period of time, the diagnosing unit (130) is configured to determine that the corresponding air-conditioner is in an abnormal state.

5. The system of any one of claims 1 to 4, wherein the management server (100) further includes a filtering unit (120) for filtering air-conditioner data,
wherein the filtering unit (120) is configured to determine whether the air-conditioner data is readable data, and to discard the data when the data is not readable data,
wherein the filtering unit (120) is configured to determine whether the air-conditioner data is necessary for diagnosis, and to exclude the data at a time of diagnosis by the diagnosing unit (130) when the air-conditioner data is not necessary for diagnosis.

6. The system of any one of claims 1 to 5, wherein the management server (100) further comprises a message unit (160) configured to generate a message based on the diagnostic result,
wherein the message unit (160) is configured to generate the message including the diagnosis result in a format corresponding to a destination receiving the diagnosis result, wherein the format includes a diagnostic result report, a web page, a text, a short message, and a multimedia message.

7. The system of claim 6, wherein when the air-conditioner data corresponds to the abnormal or failure state, the main control unit (110) is configured to transmit a repair request to a service center via the communication unit (170), and to transmit the message to the air-conditioner issuing the air-conditioner data or a terminal device having control authority over the air-conditioner.

8. A method for controlling an air-conditioner system, the method comprising:
receiving air-conditioner data from a plurality of air-conditioners;
storing the received air-conditioner data in a memory (160);
filtering the air-conditioner data by discarding the air-conditioner data when the air-conditioner data is not readable data;
diagnosing states of the air-conditioners by analyzing the air-conditioner data;
determining, based on the diagnostic result, whether the air-conditioner data corresponds to a normal, abnormal or failure state,
storing the air-conditioner data corresponding to an abnormal state or a failure state in a database (90) based on the diagnosis result;
deleting, from the memory (160), air-conditioner data corresponding to the normal state based on the diagnosis result,
wherein the filtering further includes determining whether the air-conditioner data is readable data.

9. The method of claim 8, wherein the diagnosing comprises comparing air-conditioner data of each air conditioner with previously stored air-conditioner data, data of other air-conditioner, or data of the same part in each air-conditioner, thereby to determine whether the air-conditioner data of each air-conditioner corresponds to the normal, abnormal, or failure state.

10. The method of claim 8 or 9, wherein the diagnosing comprises analyzing the air-conditioner data of each air conditioner to diagnose an abnormal state of a part of each air-conditioner, predicting efficiency and performance of each air-conditioner, and diagnosing a state of each air-conditioner.

11. The method of claim 10, wherein the diagnosing comprises, when a corresponding air-conditioner is currently operating normally but an efficiency or performance degradation thereof is predicted due to changes over a period of time, determining that the corresponding air-conditioner is in an abnormal state.

12. The method of any one of claims 8 to 11, further comprising:
when the air-conditioner data corresponds to the abnormal or failure state,
transmitting a repair request to a service center; and
transmitting a message indicating the abnormal or failure state to a terminal device having control authority over the air-conditioner issuing the air-conditioner data corresponding to the abnormal or failure state.

## Patentansprüche

1. Klimaanlagensystem, das aufweist:
mehrere Klimaanlagen (1 bis n);
einen Management-Server (100), der so konfiguriert ist, dass er Klimaanlagendaten von den mehreren Klimaanlagen in einem vorbestimmten Zeitintervall empfängt und die empfangenen Klimaanlagendaten analysiert, um einen Zustand der Klimaanlagen zu diagnostizieren, wobei der Management-Server (100) einen Speicher (150) hat; und
eine Datenbank (90), die so konfiguriert ist, dass sie die Klimaanlagendaten darin speichert,
wobei der Management-Server (100) so konfiguriert ist, dass er die Klimaanlagendaten von den Klimaanlagen empfängt, die empfangenen Klimaanlagendaten im Speicher (150) speichert und danach die Klimaanlagendaten analysiert, um den Zustand der Klimaanlagen zu diagnostizieren, und
wobei der Management-Server (100) so konfiguriert ist, dass er auf der Grundlage eines Diagnoseergebnisses bestimmt, ob die Klimaanlagendaten einem normalen, anormalen oder Ausfallzustand entsprechen,
wobei der Management-Server (100) aufweist:
eine Kommunikationseinheit (170) zum Empfangen der Klimaanlagendaten;
eine Hauptsteuereinheit (110) zum Speichern der Klimaanlagendaten im Speicher;
eine Diagnoseeinheit (130) zum Analysieren der Klimaanlagendaten, um zu bestimmen, ob die Klimaanlagendaten einem normalen, anormalen oder Ausfallzustand entsprechen; und
eine Filtereinheit (120) zum Filtern von Klimaanlagendaten,
wobei die Filtereinheit (120) so konfiguriert ist, dass sie bestimmt, ob die Klimaanlagendaten lesbare Daten sind, und die Daten verwirft, wenn die Daten keine lesbaren Daten sind,
wobei das Klimaanlagensystem **dadurch gekennzeichnet ist, dass** bei Bestimmung durch die Hauptsteuereinheit (110) auf der Grundlage des Diagnoseergebnisses, dass die Klimaanlagendaten dem normalen Zustand entsprechen, die Hauptsteuereinheit (110) so konfiguriert ist, dass sie die Klimaanlagendaten aus dem Speicher (150) löscht und die Klimaanlagendaten verwirft, und
dadurch, dass bei Bestimmung durch die Hauptsteuereinheit (110) auf der Grundlage des Diagnoseergebnisses, dass die Klimaanlagendaten dem anormalen oder Ausfallzustand entsprechen, die Hauptsteuereinheit (110) so konfiguriert ist, dass sie die Klimaanlagendaten in der Datenbank (90) speichert.

2. System nach Anspruch 1, wobei die Diagnoseeinheit (130) so konfiguriert ist, dass sie Klimaanlagendaten jeder Klimaanlage mit vorab gespeicherten Klimaanlagendaten, Daten einer anderen Klimaanlage oder Daten des gleichen Teils in jeder Klimaanlage vergleicht, um dadurch zu bestimmen, ob die Klimaanlagendaten jeder Klimaanlage dem normalen, anormalen oder Ausfallzustand entsprechen.

3. System nach Anspruch 1 oder 2, wobei die Diagnoseeinheit (130) so konfiguriert ist, dass sie die Klimaanlagendaten jeder Klimaanlage analysiert, um einen anormalen Zustand eines Teils jeder Klimaanlage zu diagnostizieren, um Wirkungsgrad und Leistung jeder Klimaanlage vorherzusagen und um einen Zustand jeder Klimaanlage zu diagnostizieren.

4. System nach Anspruch 3, wobei dann, wenn eine entsprechende Klimaanlage derzeit normal arbeitet, aber eine Wirkungsgrad- oder Leistungsbeeinträchtigung davon infolge von Änderungen über eine Zeitspanne vorhergesagt wird, die Diagnoseeinheit (130) so konfiguriert ist, dass sie bestimmt, dass sich die entsprechende Klimaanlage in einem anormalen Zustand befindet.

5. System nach einem der Ansprüche 1 bis 4, wobei der Management-Server (100) ferner eine Filtereinheit (120) zum Filtern von Klimaanlagendaten aufweist,
wobei die Filtereinheit (120) so konfiguriert ist, dass sie bestimmt, ob die Klimaanlagendaten lesbare Daten sind, und die Daten verwirft, wenn die Daten keine lesbaren Daten sind,
wobei die Filtereinheit (120) so konfiguriert ist, dass sie bestimmt, ob die Klimaanlagendaten zur Diagnose notwendig sind, und die Daten zu einer Diagnosezeit durch die Diagnoseeinheit (130) ausschließt, wenn die Klimaanlagendaten nicht zur Diagnose notwendig sind.

6. System nach einem der Ansprüche 1 bis 5, wobei der Management-Server (100) ferner eine Meldeeinheit (160) aufweist, die so konfiguriert ist, dass sie eine Meldung auf der Grundlage des Diagnoseergebnisses erzeugt,
wobei die Meldeeinheit (160) so konfiguriert ist, dass sie die Meldung mit dem Diagnoseergebnis in einem Format erzeugt, das einem das Diagnoseergebnis empfangenden Ziel entspricht, wobei zum Format ein Diagnoseergebnisbericht, eine Webseite, ein Text, eine Kurznachricht und eine Multimedianachricht gehören.

7. System nach Anspruch 6, wobei dann, wenn die Klimaanlagendaten dem anormalen oder Ausfallzustand entsprechen, die Hauptsteuereinheit (110) so konfiguriert ist, dass sie eine Reparaturanforderung zu einem Wartungszentrum über die Kommunikationseinheit (170) sendet und die Meldung zur Klimaanlage, die die Klimaanlagendaten ausgibt, oder zu einem Endgerät mit Steuerbefugnis über die Klimaanlage sendet.

8. Verfahren zur Steuerung eines Klimaanlagensystems, wobei das Verfahren aufweist:
Empfangen von Klimaanlagendaten von mehreren Klimaanlagen;
Speichern der empfangenen Klimaanlagendaten in einem Speicher (160);
Filtern der Klimaanlagendaten durch Verwerfen der Klimaanlagendaten, wenn die Klimaanlagendaten keine lesbaren Daten sind;
Diagnostizieren von Zuständen der Klimaanlagen durch Analysieren der Klimaanlagendaten;
Bestimmen auf der Grundlage des Diagnoseergebnisses, ob die Klimaanlagendaten einem normalen, anormalen oder Ausfallzustand entsprechen,
Speichern der Klimaanlagendaten, die einem anormalen oder einem Ausfallzustand auf der Grundlage des Diagnoseergebnisses entsprechen, in einer Datenbank (90);
Löschen von Klimaanlagendaten aus dem Speicher (160), die dem normalen Zustand auf der Grundlage des Diagnoseergebnisses entsprechen,
wobei das Filtern ferner aufweist: Bestimmen, ob die Klimaanlagendaten lesbare Daten sind.

9. Verfahren nach Anspruch 8, wobei das Diagnostizieren aufweist: Vergleichen von Klimaanlagendaten jeder Klimaanlage mit vorab gespeicherten Klimaanlagendaten, Daten einer anderen Klimaanlage oder Daten des gleichen Teils in jeder Klimaanlage, um dadurch zu bestimmen, ob die Klimaanlagendaten jeder Klimaanlage dem normalen, anormalen oder Ausfallzustand entsprechen.

10. Verfahren nach Anspruch 8 oder 9, wobei das Diagnostizieren aufweist: Analysieren der Klimaanlagendaten jeder Klimaanlage, um einen anormalen Zustand eines Teils jeder Klimaanlage zu diagnostizieren, Vorhersagen von Wirkungsgrad und Leistung jeder Klimaanlage und Diagnostizieren eines Zustands jeder Klimaanlage.

11. Verfahren nach Anspruch 10, wobei das Diagnostizieren aufweist: wenn eine entsprechende Klimaanlage derzeit normal arbeitet, aber eine Wirkungsgrad- oder Leistungsbeeinträchtigung davon infolge von Änderungen über eine Zeitspanne vorhergesagt wird, erfolgendes Bestimmen, dass sich die entsprechende Klimaanlage in einem anormalen Zustand befindet.

12. Verfahren nach einem der Ansprüche 8 bis 11, das ferner aufweist:
wenn die Klimaanlagendaten dem anormalen oder Ausfallzustand entsprechen,
Senden einer Reparaturanforderung zu einem Wartungszentrum; und
Senden einer Meldung über den anormalen oder Ausfallzustand zu einem Endgerät mit Steuerbefugnis über die Klimaanlage, die die Klimaanlagendaten ausgibt, die dem anormalen oder Ausfallzustand entsprechen.

## Revendications

1. Système de conditionneurs d'air comprenant :
une pluralité de conditionneurs d'air (1 à n) ;
un serveur de gestion (100) configuré pour recevoir des données de conditionneur d'air à partir de la pluralité de conditionneurs d'air à un intervalle de temps prédéterminé et pour analyser les données de conditionneur d'air reçues pour diagnostiquer un état des conditionneurs d'air, dans lequel le serveur de gestion (100) a une mémoire (150) ; et
une base de données (90) configurée pour stocker les données de conditionneur d'air dans celle-ci,
dans lequel le serveur de gestion (100) est configuré pour recevoir les données de conditionneur d'air à partir des conditionneurs d'air, pour stocker les données de conditionneur d'air reçues dans la mémoire (150), et, par la suite, pour analyser les données de conditionneur d'air pour diagnostiquer l'état des conditionneurs d'air, et
dans lequel le serveur de gestion (100) est configuré pour déterminer, sur la base d'un résultat de diagnostic, si les données de conditionneur d'air correspondent à un état normal, anormal ou de défaillance,
dans lequel
le serveur de gestion (100) comprend :
une unité de communication (170) pour recevoir les données de conditionneur d'air ;
une unité de commande principale (110) pour stocker les données de conditionneur d'air dans la mémoire ;
une unité de diagnostic (130) pour analyser les données de conditionneur d'air pour déterminer si les données de conditionneur d'air correspondent à un état normal, anormal, ou de défaillance ; et
une unité de filtrage (120) pour filtrer des données de conditionneur d'air,
dans lequel l'unité de filtrage (120) est configurée pour déterminer si les données de conditionneur d'air sont des données lisibles, et pour rejeter les données lorsque les données ne sont pas des données lisibles,
le système de conditionnement d'air étant **caractérisé en ce que**
lorsque l'unité de commande principale (110) détermine, sur la base du résultat de diagnostic, que les données de conditionneur d'air correspondent à l'état normal, l'unité de commande principale (110) est configurée pour supprimer les données de conditionneur d'air de la mémoire (150) et rejeter les données de conditionneur d'air, et
**en ce que** lorsque l'unité de commande principale (110) détermine, sur la base du résultat de diagnostic, que les données de conditionneur d'air correspondent à l'état anormal ou de défaillance, l'unité de commande principale (110) est configurée pour stocker les données de conditionneur d'air dans la base de données (90).

2. Système selon la revendication 1, dans lequel l'unité de diagnostic (130) est configurée pour comparer des données de conditionneur d'air de chaque conditionneur d'air à des données de conditionneur d'air stockées au préalable, des données d'un autre conditionneur d'air, ou des données de la même partie dans chaque conditionneur d'air, pour déterminer ainsi si les données de conditionneur d'air de chaque conditionneur d'air correspondent à l'état normal, anormal, ou de défaillance.

3. Système selon l'une quelconque des revendications 1 ou 2, dans lequel l'unité de diagnostic (130) est configurée pour analyser les données de conditionneur d'air de chaque conditionneur d'air pour diagnostiquer un état anormal d'une partie de chaque conditionneur d'air, pour prédire un rendement et des performances de chaque conditionneur d'air, et pour diagnostiquer un état de chaque conditionneur d'air.

4. Système selon la revendication 3, dans lequel lorsqu'un conditionneur d'air correspondant fonctionne normalement à ce moment mais qu'une dégradation de rendement ou de performances de celui-ci est prédite en raison de changements sur une période de temps, l'unité de diagnostic (130) est configurée pour déterminer que le conditionneur d'air correspondant est dans un état anormal.

5. Système selon l'une quelconque des revendications 1 à 4, dans lequel le serveur de gestion (100) comprend en outre une unité de filtrage (120) pour filtrer des données de conditionneur d'air,
dans lequel l'unité de filtrage (120) est configurée pour déterminer si les données de conditionneur d'air sont des données lisibles, et pour rejeter les données lorsque les données ne sont pas des données lisibles,
dans lequel l'unité de filtrage (120) est configurée pour déterminer si les données de conditionneur d'air sont nécessaires pour un diagnostic, et pour exclure les données à un temps de diagnostic par l'unité de diagnostic (130) lorsque les données de conditionneur d'air ne sont pas nécessaires pour un diagnostic.

6. Système selon l'une quelconque des revendications 1 à 5, dans lequel le serveur de gestion (100) comprend en outre une unité de message (160) configurée pour générer un message sur la base du résultat de diagnostic,
dans lequel l'unité de message (160) est configurée pour générer le message comprenant le résultat de diagnostic dans un format correspondant à une destination recevant le résultat de diagnostic, dans lequel le format comprend un rapport de résultat de diagnostic, une page Web, un texte, un message court, et un message multimédia.

7. Système selon la revendication 6, dans lequel lorsque les données de conditionneur d'air correspondent à l'état anormal ou de défaillance, l'unité de commande principale (110) est configurée pour transmettre une demande de réparation à un centre de services via l'unité de communication (170), et pour transmettre le message au conditionneur d'air délivrant les données de conditionneur d'air ou à un dispositif terminal ayant une autorité de commande sur le conditionneur d'air.

8. Procédé pour commander un système de conditionneurs d'air, le procédé comprenant :
la réception de données de conditionneur d'air à partir d'une pluralité de conditionneurs d'air ;
le stockage des données de conditionneur d'air reçues dans une mémoire (160) ;
le filtrage des données de conditionneur d'air en rejetant les données de conditionneur d'air lorsque les données de conditionneur d'air ne sont pas des données lisibles ;
le diagnostic d'états des conditionneurs d'air en analysant les données de conditionneur d'air ;
le fait de déterminer, sur la base du résultat de diagnostic, si les données de conditionneur d'air correspondent à un état normal, anormal ou de défaillance,
le stockage des données de conditionneur d'air correspondant à un état anormal ou un état de défaillance dans une base de données (90) sur la base du résultat de diagnostic ;
la suppression, à partir de la mémoire (160), de données de conditionneur d'air correspondant à l'état normal sur la base du résultat de diagnostic,
dans lequel le filtrage comprend en outre le fait de déterminer si les données de conditionneur d'air sont des données lisibles.

9. Procédé selon la revendication 8, dans lequel le diagnostic comprend la comparaison de données de conditionneur d'air de chaque conditionneur d'air avec des données de conditionneur d'air stockées au préalable, des données d'un autre conditionneur d'air, ou des données de la même partie dans chaque conditionneur d'air, pour déterminer ainsi si les données de conditionneur d'air de chaque conditionneur d'air correspondent à l'état normal, anormal, ou de défaillance.

10. Procédé selon la revendication 8 ou 9, dans lequel le diagnostic comprend l'analyse des données de conditionneur d'air de chaque conditionneur d'air pour diagnostiquer un état anormal d'une partie de chaque conditionneur d'air, la prédiction d'un rendement et de performances de chaque conditionneur d'air, et le diagnostic d'un état de chaque conditionneur d'air.

11. Procédé selon la revendication 10, dans lequel le diagnostic comprend, lorsqu'un conditionneur d'air correspondant fonctionne normalement à ce moment mais qu'une dégradation de rendement ou de performances de celui-ci est prédite en raison de changements sur une période de temps, le fait de déterminer que le conditionneur d'air correspondant est dans un état anormal.

12. Procédé selon l'une quelconque des revendications 8 à 11, comprenant en outre :
lorsque les données de conditionneur d'air correspondent à l'état anormal ou de défaillance,
la transmission d'une demande de réparation à un centre de services ; et
la transmission d'un message indiquant l'état anormal ou de défaillance à un dispositif terminal ayant une autorité de commande sur le conditionneur d'air délivrant les données de conditionneur d'air correspondant à l'état anormal ou de défaillance.
